(19) **Europäisches Patentamt / European Patent Office / Office européen des brevets**

(11) **EP 1 596 224 B1**

(12) **FASCICULE DE BREVET EUROPEEN**

(45) Date de publication et mention
de la délivrance du brevet:
**10.10.2007 Bulletin 2007/41**

(51) Int Cl.:
***G01V 1/28*** (2006.01)

(21) Numéro de dépôt: **05009897.9**

(22) Date de dépôt: **06.05.2005**

(54) **Procédé auscultation du sol en proche surface, et/ou en sous-sol, pour la détection d'hétérogénéites locales du milieu**

Abhörverfahren des oberflächennahen Bodenbereiches oder des Untergrundes zur Detektion von lokalen Heterogenitäten

Auscultation process of the near subsurface and/or the underground for the detection of local heterogeneties

(84) Etats contractants désignés:
**AT BE BG CH CY CZ DE DK EE ES FI FR GB GR HU IE IS IT LI LT LU MC NL PL PT RO SE SI SK TR**

(30) Priorité: **07.05.2004 FR 450880**

(43) Date de publication de la demande:
**16.11.2005 Bulletin 2005/46**

(73) Titulaire: **SISMOCEAN, Société par actions simplifiée**
**34070 Montpellier (FR)**

(72) Inventeurs:
• **Adamy, Jérome**
**34200 Sete (FR)**

• **Durand, Grégory**
**34110 Frontignan (FR)**
• **Mouton, Edouard**
**50100 Cherbour Octeville (FR)**

(74) Mandataire: **Rhein, Alain et al**
**Cabinet BREV&SUD**
**2460, avenue Albert Einstein**
**34000 Montpellier (FR)**

(56) Documents cités:
**WO-A-03/056360          US-B1- 6 253 870**

## Description

La présente invention se rapporte à un procédé d'auscultation du sol en proche surface, et/ou en sous-sol, pour la détection d'hétérogénéités locales du milieu, telles que notamment des cavités, des conduites enterrées, ou des zones de décompression du sol ou du sous-sol, dans lequel on effectue des enregistrements et des analyses de données sismiques recueillies au moyen d'une flûte sismique comprenant N capteurs de données sismiques espacés d'une distance DX sur toute sa longueur, ladite flûte étant reliée à des moyens de traitement des données sismiques relevées au niveau de chacun des N capteurs.

Une telle invention trouvera son application dans le domaine de la géophysique et de la prospection sismique, et a pour principal objectif de permettre la découverte, dans le sol et/ou le proche sous-sol, d'hétérogénéités du terrain qui pourraient constituer un facteur de risques important pour les activités de surface.

La reconnaissance préalable des sols permet en effet d'appréhender de nombreux problèmes qui peuvent se poser lors de l'étude de projets et la mise en oeuvre de chantiers de travaux publics ; ainsi, la détection de cavités à l'aval du front de taille d'un tunnelier, le repérage de conduites enterrées dans le sol urbain, ou la qualification des formations avant le creusement d'une tranchée de grande longueur constituent des exemples d'études essentielles aussi bien au bon déroulement des chantiers concernés qu'à la fiabilité des ouvrages accomplis.

Par ailleurs, procéder à la reconnaissance des sols et/ou des sous-sols est également utile lors de l'expertise ou de la maintenance d'ouvrages de travaux publics, car les propriétés d'un terrain constituent généralement le lien entre la cause d'un éventuel sinistre et les remèdes que l'on se propose de mettre en place pour le prévenir ou le réparer. Ainsi, par exemple, la détection de cavités pouvant provoquer des déformations du ballast ou des effondrements locaux du ballast sous les lignes de chemin de fer est une opération courante et primordiale qui permet de procéder aussitôt à leur remblaiement et d'éviter de sérieuses catastrophes ferroviaires.

La détection et la caractérisation des hétérogénéités du sol ou du proche sous-sol définissent par conséquent un enjeu économique considérable.

Il existe à l'heure actuelle deux catégories de moyens de reconnaissance utilisés pour effectuer des investigations de ce type : les méthodes d'observation du terrain, consistant à prélever des échantillons en creusant des puits, des tranchées, ou en effectuant des sondages, et les méthodes de mesure « in situ » basées sur la mesure d'une propriété physique du terrain, dont font partie les études géophysiques.

Ces dernières sont classiquement menées selon différentes méthodes, bien connues actuellement, et choisies en fonction des contraintes du terrain ou des objectifs particuliers fixés au préalable par les cahiers des charges.

Ainsi, la prospection électrique, qui consiste à injecter du courant et à mesurer, au niveau d'électrodes réceptrices, des valeurs de résistivité du sous-sol, permet, entre autres, de déterminer la profondeur de discontinuités séparant des terrains de natures sensiblement différentes.

La technique de la microgravimétrie, reposant sur la détermination de la densité d'un massif, ou de la profondeur d'une zone recouverte de matériaux de densité différente, est par ailleurs l'un des moyens utilisé pour la prévention du risque d'effondrement et pour la localisation de cavités souterraines.

Une autre méthode connue permettant de fournir une image du sous-sol consiste encore à utiliser un géo-radar.

Enfin, les méthodes sismiques réflexion et réfraction sont largement utilisées pour étudier les propriétés élastiques des roches, afin de distinguer les roches poreuses ou fracturées des roches compactes, les roches saturées des non saturées ou les formations meubles des formations consolidées. Les mesures effectuées lors de la mise en oeuvre de ces deux méthodes portent sur les trajets suivis dans le sous-sol par des ondes générées par des sources sismiques telles que des explosions, et les vitesses de déplacement de ces ébranlements sismiques dans les diverses formations rocheuses.

Le matériel utilisé pour la mise en oeuvre de ces deux méthodes se compose principalement de capteurs, et d'une flûte sismique reliant ces derniers à un enregistreur.

Bien que couramment employées et adaptées à un grand nombre de situations, ces méthodes présentent cependant des limites d'utilisation que la présente invention se veut à même de solutionner. Ainsi par exemple, les techniques de résistivité et de géo-radar ne fonctionnent pas en présence d'un revêtement de surface, tel que notamment le ballast.

La technique de la gravimétrie, quant à elle, présente l'inconvénient d'une très faible vitesse d'avancement. En outre, elle implique la présence d'opérateurs sur les lieux de mesure, ce qui soulève un problème de sécurité important, en particulier lorsqu'il s'agit de voies ferrées circulées. Enfin, cette méthode nécessite un certain nombre de reprises, aussi bien sur le terrain qu'au cours du traitement des données.

Enfin, la sismique réflexion THR et la sismique onde de surface en mode réflexion impliquent l'utilisation de sources sismiques actives, typiquement définies en mode terrestre, par des charges d'explosif ou une chute de poids. Ces sources nécessitent un bon couplage avec le sol pour optimiser la transmission d'énergie vers le sous-sol. De ce fait, leur mise en oeuvre, par exemple dans le cadre de voies ferrées, génère inévitablement la déformation, la désorganisation, voire la destruction du ballast. Par conséquent, si ces deux techniques peuvent être employées pour des reconnaissances de sol avant pose, elles ne peuvent en aucun cas l'être dans le cadre de voies ferrées installées et opérationnelles.

Selon un état de la technique bien connu de l'homme du métier, ces deux méthodes font appel à des traitements des signaux collectés, notamment sous forme de transformations mathématiques. Ces transformations visent l'accession des caractéristiques de dispersion des ondes de surface.

L'état de la technique est montré dans US 6 253 870 et WO 03/056360.

La présente invention vise par conséquent à proposer une autre solution pour la détection des hétérogénéités du sol et/ou du proche sous-sol, telles que notamment des cavités, ladite solution étant adaptée à tout type de surface sans nécessiter une modification fondamentale de ses éléments structurants, et présentant en outre un haut rendement.

A cet effet, l'invention concerne un procédé d'auscultation du sol en proche surface, et/ou en sous-sol, pour la détection d'hétérogénéités locales du milieu, telles que notamment des cavités, des conduites enterrées, ou des zones de décompression du sol ou du sous-sol, dans lequel on effectue des enregistrements et des analyses de données sismiques recueillies au moyen d'une flûte sismique disposée à la surface du sol, comprenant N capteurs de données sismiques espacés sur toute sa longueur d'une distance DX, ladite flûte sismique étant reliée à des moyens de traitement des données sismiques enregistrées au niveau de tout ou partie des N capteurs, caractérisé en ce que :

- l'on choisit, à partir d'un nombre n de capteurs choisis parmi les capteurs ayant enregistré des données sismiques, au moins une fenêtre de calcul virtuellement divisée en deux parties,

- l'on traite, à l'intérieur de chacune des deux parties, les données relatives aux différents niveaux de l'énergie sismique générée par une source d'énergie et se propageant sous forme d'ondes de surface parcourant le sol ou le sous-sol, en considérant deux groupes d'ondes de surface, à savoir celles dont les directions de propagation dans le sol sont orientées de l'extrémité gauche vers l'extrémité droite de la fenêtre de calcul, et celles dont les directions de propagation dans le sol sont orientées de l'extrémité droite de la fenêtre de calcul vers l'extrémité gauche,

- l'on compare entre elles les différentes données traitées pour repérer d'éventuels contrastes d'amplitude d'énergie sismique, représentatifs de la présence d'hétérogénéités.

Le traitement des données se fait par des transformées classiques, largement connues et employées dans le domaine de l'analyse des ondes de surface, ces transformées permettant d'exprimer le caractère dispersif des ondes de surface et d'accéder à leurs fluctuations d'énergie.

Selon une caractéristique du présent procédé, pour repérer les contrastes d'amplitude d'énergie sismique :

- l'on analyse dans chacune des deux parties de la fenêtre de calcul, les niveaux d'énergie sismique d'une onde dont la circulation dans le sol est orientée de l'extrémité gauche vers l'extrémité droite de la section de la flûte dans laquelle sont choisis les capteurs appartenant à la fenêtre de calcul courante, respectivement lorsque l'onde arrive au niveau de la partie gauche puis lorsque l'onde arrive au niveau de la partie droite, et le niveau d'énergie sismique d'une onde dont la circulation dans le sol est orientée de l'extrémité droite vers l'extrémité gauche de la section de la flûte dans laquelle sont choisis les capteurs appartenant à la fenêtre de calcul courante, respectivement lorsqu'elle arrive au niveau de la partie droite puis lorsqu'elle arrive au niveau de la partie gauche,

- l'on rapporte à chaque fois les différents niveaux d'énergie analysés dans chacune des deux parties à l'énergie sismique totale orientée,

- l'on compare entre eux les ratios obtenus.

D'autre part, selon un premier mode de mise en oeuvre, le présent procédé se caractérise en ce que l'on utilise une fenêtre de calcul qui recouvre l'ensemble de la flûte sismique et dans laquelle le nombre n de capteurs choisis est égal au nombre N de capteurs.

Selon un second mode de mise en oeuvre, le procédé se caractérise encore en ce que l'on utilise une fenêtre de calcul dans laquelle le nombre n de capteurs choisis est inférieur au nombre N de capteurs.

Ceci permet avantageusement, selon une autre particularité du présent procédé, d'augmenter la fiabilité des résultats et de permettre une auscultation du sol ou du sous-sol sur une faible surface, en déplaçant la fenêtre de calcul, dans laquelle le nombre n de capteurs choisis est inférieur au nombre N de capteurs, le long de la flûte sismique, autant de fois que possible à partir des N capteurs.

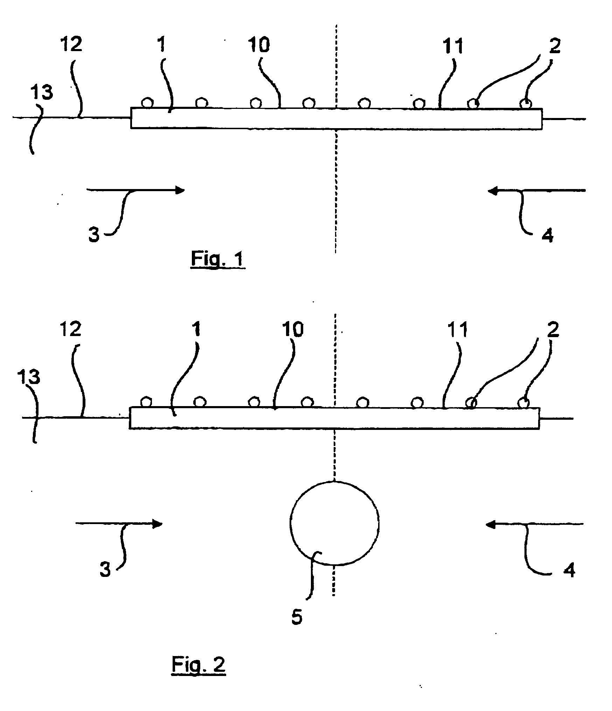

L'on comprendra à présent mieux le principe de fonctionnement du procédé selon l'invention, décrit plus en détail en se référant aux figures 1 et 2 jointes en annexe, qui représentent une flûte sismique 1 positionnée à la surface du sol 12 au niveau de deux zones, dont l'une ne présente pas d'hétérogénéité du sous-sol 13 tandis que l'autre comporte une cavité souterraine 5.

Sur ces deux figures, la flûte sismique 1, dont on a représenté une section virtuellement partagée en deux parties, à savoir une partie gauche 10, et une partie droite 11, eat munie de plusieurs capteurs 2 choisis en fonction des objectifs à atteindre et des particularités du site. Ils peuvent par exemple être définis par des géophones, des géophones montés sur cardan, des hydrophones, ou encore tout type de capteurs permettant de mesurer des ébranlements, et sont reliés à un laboratoire d'enregistrement de données.

Les capteurs 2 sont espacés entre eux d'une distance DX, pouvant être variable, et aptes à enregistrer le long de la flûte sismique 1 les différents niveaux d'énergie des ondes 3 et 4 parcourant le sous-sol 13 et générées par des sources d'énergie, lesquelles peuvent par exemple être définies par du bruit provenant de phénomènes naturels, tels que le vent, les marées, les vagues, ou du bruit anthropique, tel que notamment le trafic routier, ferroviaire, aérien, ou encore du bruit spécifiquement manufacturé à des fins d'enregistrements sismiques.

Ainsi, à partir des signaux relevés par les différents capteurs 2, diverses valeurs des niveaux d'énergie des ondes circulant sous la flûte sismique 1 dans une infinité de directions vont être obtenues, en considérant d'une part le groupe d'ondes arrivant aux abords de la flûte sismique 1 depuis son extrémité gauche et d'autre part le groupe d'ondes arrivant au niveau de la flûte sismique 1 depuis son extrémité droite. Plus spécifiquement, tels que représenté à la figure 1, on considère les valeurs des niveaux d'énergie d'ondes 3 et 4 circulant dans des directions opposées, respectivement de la partie droite 11 vers la partie gauche 10, et de la partie gauche 10 vers la partie droite 11 de la flûte sismique 1, ce qui permettra notamment d'étudier et de comparer entre elles les valeurs suivantes :

- le niveau d'énergie $E_1$ enregistré dans la partie gauche 10 à partir de l'onde 3,

- le niveau d'énergie $E_2$ enregistré dans la partie droite 11 à partir de l'onde 3,

- le niveau d'énergie $E_3$ enregistré dans la partie droite 11 à partir de l'onde 4, et

- le niveau d'énergie $E_4$ enregistré dans la partie gauche 10 à partir de l'onde 4.

Le principe innovant sur lequel repose le présent procédé est en fait comparable, par analogie, à celui des ombres portées par une source de lumière éclairant un objet sous un certain angle. Ainsi, en comparant l'énergie sismique à une source de lumière, et une hétérogénéité du terrain à un objet, l'objectif du procédé selon l'invention est de détecter dans le sol et/ou le proche sous-sol, d'éventuelles « ombres sismiques », c'est à dire des zones de moindre énergie sismique, relativement aux niveaux d'énergie enregistrés alentours, ces zones d'atténuation d'énergie étant représentatives de la présence d'une hétérogénéité.

Ceci est réalisé en rapportant les niveaux d'énergie $E_1$, $E_2$, $E_3$ $E_4$, issus du traitement des données enregistrées par les capteurs 2, aux énergies totales orientées Ea, et Eb des ondes 3 et 4, puis en comparant entre eux les ratios $R_1$ ($E_1$/Ea), partant du champ incident pour l'énergie circulant de l'extrémité gauche vers l'extrémité droite de la flûte sismique, par exemple dans le sens de l'onde 3, $R_2$ ($E_2$/Ea), partant du champ éventuellement réfléchi (énergie relative à l'onde 4 éventuellement réfléchie sur une cavité 5) et du champ transmis, $R_3$ ($E_3$/Eb), partant du champ incident pour l'énergie circulant de l'extrémité droite vers l'extrémité gauche de la flûte sismique par exemple dans le sens de l'onde 4, $R_4$ ($E_4$/Eb), partant du champ éventuellement réfléchi (énergie relative à l'onde 4 éventuellement réfléchie sur une cavité 5) et du champ transmis.

Ainsi, dans le cas de la présence d'une hétérogénéité, telle qu'une cavité souterraine 5, définissant un obstacle à la propagation de l'énergie sismique dans le sous-sol 13, et créant de ce fait une déperdition d'énergie, si les valeurs des ratios $R_1$ et $R_2$ restent similaires à celles des ratios $R_3$ et $R_4$, l'on constate que les valeurs de $R_1$ et de $R_3$ sont, de manière caractéristique, plus élevées que celles de $R_2$ et $R_4$. Par opposition, en cas d'absence d'hétérogénéité, l'énergie sismique est libre de parcourir le sous-sol 13 sans rencontrer d'obstacle, il n'y a pas de déperdition d'énergie et l'on ne constate pas de différence notable entre les valeurs de $R_1$, et $R_3$, com-parées avec celles de $R_2$ et $R_4$.

Le présent procédé prévoit par ailleurs deux possibilités de mise en oeuvre de la flûte sismique 1, dans lesquelles l'on considère soit une soit plusieurs « fenêtres de calcul », partagées chacune fictivement en deux moitiés, et définies à partir d'un nombre n de capteurs 2 choisis parmi les N capteurs 2 que comporte ladite flûte sismique 1.

Une première possibilité consiste ainsi à prendre en considération, pour chaque station de mesure, c'est à dire chaque flûte sismique 1, les enregistrements relevés sur l'ensemble de la flûte sismique 1, par tout ou partie des capteurs 2, ce qui correspond à considérer n égal à N. Le calcul des différents ratios précédemment décrits s'effectue alors à l'intérieur d'une seule fenêtre de calcul fixe.

La seconde possibilité consiste à choisir un nombre n de capteurs 2 choisis inférieur au nombre total N de capteurs 2, de sorte à définir une fenêtre de calcul, dont la plus petite comprendra au moins 4 capteurs 2, apte à être déplacée progressivement le long de ladite flûte sismique 1, autant de fois que possible à partir des N capteurs 2 qui s'y trouvent disposés.

Ceci permet en fait de définir plusieurs fenêtres de calcul utilisées successivement pour permettre d'effectuer des analyses et des calculs similaires à ceux décrits précédemment.

Dans ce cas de figure, l'on peut espacer deux fenêtres de calcul successives d'une distance variable, mais de préférence au moins égale à la distance physique DX entre deux capteurs 2 consécutifs de la flûte sismique 1.

Ainsi, en considérant que la distance Dx entre deux capteurs 2 consécutifs d'une même fenêtre de calcul est égale à la distance DX entre deux capteurs 2 de la flûte sismique 1, l'on obtient N-n+1 possibilités de positions pour les fenêtres de calcul successives, et un espacement entre deux fenêtres de calcul successives égal à DX.

Par conséquent, en admettant que l'on dispose d'une flûte sismique 1 comportant 144 capteurs 2 espacés entre eux de 1 mètre, et que l'on définisse une fenêtre de calcul comportant 48 capteurs espacés de 1 mètre entre eux, l'on obtient 97 positions possibles de fenêtres de calcul le long de ladite flûte sismique 1. En espaçant deux fenêtres de calcul successives du minimum possible, soit de la distance entre deux capteurs 2 consécutifs, l'on obtient une fenêtre de calcul tous les mètres.

Le fait de définir plusieurs fenêtres de calcul successives sur une même flûte sismique 1 autorise avantageusement une densité de mesure importante, une redondance élevée des analyses réalisées et un accroissement de la fiabilité du résultat. Cette caractéristique permet en outre une auscultation à de très petites échelles, par exemple de l'ordre du mètre linéaire avec des flûtes sismiques 1 déplacées physiquement de plusieurs décamètres.

A ce propos, si l'avancement des mesures s'effectue par le déplacement des éventuelles multiples fenêtres de calcul successives le long de la flûte sismique 1, le présent procédé prévoit également, notamment pour des analyses le long de grands linéaires comme des voies de circulation (voies ferrées, pistes d'aéroport, digues...) de procéder conjointement à l'avancement physique de la flûte sismique 1.

L'écartement entre deux stations de mesure consécutives est alors défini en fonction de la longueur de la flûte sismique 1, du nombre de capteurs 2 enregistrés, de l'espacement DX entre deux capteurs 2 consécutifs, de la taille de la plus petite fenêtre de calcul souhaitée, et de l'espacement entre deux fenêtres de calcul successives.

A titre d'exemple, la continuité des mesures est assurée sur un linéaire pour un déplacement de la flûte de :

$$(N * DX) - (n * DX) + DX$$

N étant le nombre de capteurs de la flûte, DX l'espacement entre deux capteurs consécutifs et n le nombre de capteurs de la fenêtre de calcul, donc enregistrés.

Ainsi, le présent procédé autorise par exemple un avancement physique de plusieurs centaines de kilomètres avec un point de mesure tous les mètres.

Tel qu'il ressort de ce qui précède, les avantages du procédé selon l'invention sont par conséquent multiples. S'appuyant sur des sources d'énergie sismique naturelles, ou anthropiques, il permet en particulier de procéder à des auscultations du sol et/ou du proche sous-sol sans interagir avec un éventuel revêtement de surface. En outre, et contrairement à d'autres méthodes utilisées classiquement pour le même type d'analyses, il s'agit d'un procédé à haut rendement et dont les résultats présentent une très grande fiabilité.

**Revendications**

**1.** Procédé d'auscultation du sol en proche surface, et/ou en sous-sol, pour la détection d'hétérogénéités locales du milieu, telles que notamment des cavités, des conduites enterrées, ou des zones de décompression du sol ou du sous-sol, dans lequel on effectue des enregistrements et des analyses de données sismiques recueillies au moyen d'une flûte sismique (1) disposée à la surface du sol, comprenant N capteurs (2) de données sismiques espacés sur toute sa longueur d'une distance (DX), ladite flûte sismique (1) étant reliée à des moyens de traitement des données sismiques enregistrées au niveau de tout ou partie des N capteurs (2), **caractérisé en ce que** :

- l'on choisit, à partir d'un nombre (n) de capteurs (2) choisis parmi les capteurs (2) ayant enregistré des données sismiques, au moins une fenêtre de calcul virtuellement divisée en deux parties (10, 11),
- l'on traite, à l'intérieur de chacune des deux parties (10, 11), les données relatives aux différents niveaux de l'énergie sismique ($E_1$, $E_2$, $E_3$, $E_4$) générée par une source d'énergie et se propageant sous forme d'ondes de surface (3, 4) parcourant le sol (12) ou le sous-sol (13), en considérant deux groupes d'ondes de surface (3, 4), à savoir celles dont les directions de propagation dans le sol sont orientées de l'extrémité gauche vers l'extrémité droite de la fenêtre de calcul, et celles dont les directions de propagation dans le sol sont orientées de l'extrémité droite de la fenêtre de calcul vers l'extrémité gauche,
- l'on compare entre elles les différentes données traitées pour repérer d'éventuels contrastes d'amplitude d'énergie sismique, représentatifs de la présence d'hétérogénéités.

**2.** Procédé selon la revendication 1, **caractérisé en ce que** pour repérer les contrastes d'amplitude d'énergie sismique :

- l'on analyse dans chacune des deux parties (10, 11) de la fenêtre de calcul, les niveaux d'énergie sismique d'une onde (3) dont la circulation dans le sol est orientée de l'extrémité gauche vers l'extrémité droite de la fenêtre de calcul, respectivement lorsque l'onde (3) arrive au niveau la partie gauche (10) puis lorsque l'onde (3) arrive au niveau de la partie droite (11), et le niveau d'énergie sismique d'une onde (4) dont la circulation dans le sol est orientée de l'extrémité droite vers l'extrémité gauche de la fenêtre de calcul, respectivement lorsqu'elle arrive au niveau de la partie droite (11) puis lorsqu'elle arrive au niveau de la partie gauche (10),
- l'on rapporte à chaque fois les différents niveaux d'énergie ($E_1$, $E_2$, $E_3$, $E_4$) enregistrés dans chacune des deux parties (10, 11) à l'énergie sismique totale orientée (Ea, Eb),
- l'on compare entre eux les ratios ($R_1$, $R_2$, $R_3$, $R_4$) obtenus.

**3.** Procédé selon l'une quelconque des revendications 1 ou 2, **caractérisé en ce que** l'on utilise une fenêtre de calcul qui recouvre l'ensemble de la flûte sismique (1) et dans laquelle le nombre n de capteurs (2) choisis est égal au nombre N de capteurs (2).

**4.** Procédé selon l'une quelconque des revendications précédentes, **caractérisé en ce que** l'on utilise une fenêtre de calcul dans laquelle le nombre n de capteurs (2) choisis est inférieur au nombre N de capteurs (2).

**5.** Procédé selon la revendication 4, **caractérisé en ce que** pour augmenter la fiabilité des résultats et permettre une auscultation du sol ou du sous-sol (13) sur une faible surface, l'on déplace la fenêtre de calcul, dans laquelle le nombre n de capteurs (2) choisis est inférieur au nombre N de capteurs, le long de la flûte sismique (1), autant de fois que possible à partir des N capteurs (2).

**6.** Procédé selon la revendication 5, **caractérisé en ce que** l'on espace deux fenêtres de calcul consécutives d'une distance physique au moins égale à la distance (DX) entre deux capteurs (2) consécutifs de la flûte sismique (1).

**7.** Procédé selon l'une quelconque des revendications précédentes, **caractérisé en ce que** pour détecter des hétérogénéités du sous-sol (13) sur une surface importante, notamment le long de grands linéaires, l'on déplace progressivement la flûte sismique (1) d'un écartement qui dépend de sa longueur, de la valeur N du nombre de capteurs (2) qu'elle comprend, de l'espacement (DX) entre les différents capteurs (2), de la taille de la plus petite fenêtre de calcul souhaitée, et de l'espacement entre deux fenêtres de calcul.

**8.** Procédé selon l'une quelconque des revendications précédentes, **caractérisé en ce que** l'on utilise en tant que source d'énergie sismique le bruit ambiant.

**9.** Procédé selon l'une quelconque des revendications 1 à 7, **caractérisé en ce que** l'on utilise en tant que source d'énergie sismique du bruit manufacturé.

**10.** Procédé selon l'une quelconque des revendications 1 à 7, **caractérisé en ce que** l'on utilise en tant que source d'énergie sismique du bruit anthropique.

**Claims**

**1.** Method for auscultation of the soil in the near surface, and/or in the underground, for detecting local heterogeneities of the environment, such as in particular cavities, buried pipes, or areas of decompression of the soil or of the underground, in which recordings and analyses of seismic data gathered by means of a seismic streamer (1) disposed at the soil surface are made, comprising M seismic data sensors (2) spaced out all along its length at a distance (DX), said seismic streamer (1) being connected to means for processing seismic data recorded at the level of all or part of the M sensors (2), **characterized in that**:

- one chooses, from a number (n) of sensors (2) chosen among the sensors (2) that have recorded seismic data, at least one calculation window virtually divided into two portions (10, 11),
- one processes, within each of the two portions (10, 11), data relative to different levels of seismic energy ($E_1$, $E_2$, $E_3$, $E_4$) generated by an energy source and propagating in the form of surface waves (3, 4) traversing the soil (12) or the underground (13), considering two groups of surface waves (3, 4), namely those whose directions of propagation in the soil are oriented from the left end toward the right end of the calculation window, and those whose directions of propagation in the soil are oriented from the right end of the calculation window toward the left end,
- one compares with each other the different processed data in order to locate possible contrasts of amplitude of seismic energy, representative of the presence of heterogeneities.

**2.** Method according to claim 1, **characterized in that** in order to locate the contrasts of amplitude of seismic energy:

- one analyses in each of the two portions (10, 11) of the calculation window, the levels of seismic energy of a wave (3) whose circulation in the soil is oriented from the left end toward the right end of the calculation window, respectively when the wave (3) arrives at the level of the left portion (10) then when the wave (3) arrives at the level of the right portion (11), and the level of seismic energy of a wave (4) whose circulation in the soil is oriented from the right end toward the left end of the calculation window, respectively when it arrives at the level of the right portion (11) then when it arrives at the level of the left portion (10),
- one calculates each time the different levels of energy ($E_1$, $E_2$, $E_3$, $E_4$) recorded in each of the two portions (10, 11) with respect to the total oriented seismic energy (Ea, Eb),
- one compares with each other the obtained ratios ($R_1$, $R_2$, $R_3$, $R_4$).

3. Method according to any of the claims 1 or 2, **characterized in that** one uses a calculation window covering the entire seismic streamer (1) and in which the number n of sensors (2) chosen is equal to the number N of sensors (2).

4. Method according to any of the preceding claims, **characterized in that** one uses a calculation window in which the number n of sensors (2) chosen is smaller than the number N of sensors (2).

5. Method according to claim 4, **characterized in that** in order to increase the reliability of the results and permit an auscultation of the soil or of the underground (13) on a small surface, one shifts the calculation window, in which the number N of sensors (2) chosen is smaller than the number N of sensors, along the seismic streamer (1), as much as possible from the N sensors (2).

6. Method according to claim 5, **characterized in that** one spaces out two consecutive calculation windows at a physical distance at least equal to the distance (DX) between two consecutive sensors (2) of the seismic streamer (1).

7. Method according to any of the preceding claims, **characterized in that** in order to detect heterogeneities of the underground (13) on a considerable surface, in particular along large linear spaces, one shifts progressively the seismic streamer (1) by a distance depending on its length, on the value N of the number of sensors (2) it includes, on the distance (DX) between the different sensors (2), on the size of the smallest calculation window desired, and on the distance between two calculation windows.

8. Method according to any of the preceding claims, **characterized in that** one uses ambient noise as a source of seismic energy.

9. Method according to any of the claims 1 through 7, **characterized in that** one uses manufactured noise as a source of seismic energy.

10. Method according to any of the claims 1 through 7, **characterized in that** one uses anthropic noise as a source of seismic energy.

**Patentansprüche**

1. Verfahren zum Abhören des oberflächennahen Bodenbereiches und/oder des Untergrundes zur Detektion von örtlichen Heterogenitäten des Bodens, wie insbesondere Hohlräume, unterirdische Leitungen oder Druckentlastungszonen im Erdboden oder im Untergrund, bei welchem Aufzeichnungen und Analysen der seismischen Daten durchgeführt werden, die mit Hilfe eines seismischen Kabels (1) gesammelt werden, der sich auf der Erdoberfläche befindet, umfassend N Sensoren (2) für seismische Daten, die auf all seiner Länge um eine Entfernung (DX) voneinander beabstandet sind, wobei das besagte seismische Kabel (1) mit Mitteln zur Bearbeitung der seismischen Daten, die im Bereich von allen oder von einem Teil der N Sensoren (2) registriert wurden, verbunden sei, **dadurch gekennzeichnet, dass**:

   - aus einer Anzahl (n) von Sensoren (2), die unter denjenigen Sensoren (2) gewählt sind, die seismische Daten registriert haben, wenigstens ein Berechnungsfenster (10, 11) gewählt wird, das virtuell in zwei Teile aufgeteilt ist,
   - innerhalb jedes der beiden Teile (10, 11) die Daten behandelt werden, die sich auf die verschiedenen Niveaus der seismischen Energie ($E_1$, $E_2$, $E_3$, $E_4$) beziehen, die durch eine Energiequelle erzeugt ist und sich in Form von Oberflächenwellen (3, 4) ausbreitet, die den Boden (12) oder den Untergrund (13) durchströmen, wobei zwei Gruppen von Oberflächenwellen (3, 4) berücksichtigt werden, und zwar diejenigen, deren Verbreitungsrichtungen im Boden vom linken Randbereich des Berechnungsfensters in Richtung auf den rechten Randbereich gerichtet sind, und diejenigen, deren Verbreitungsrichtungen im Boden vom rechten Randbereich des Berechnungsfensters in Richtung auf den linken Randbereich gerichtet sind,
   - die verschiedenen behandelten Daten miteinander verglichen werden, um etwaige Amplitudenkontraste der seismischen Energie zu finden, die für das Vorhandensein von Heterogenitäten repräsentativ sind.

2. Verfahren nach Anspruch 1, **dadurch gekennzeichnet, dass**, um die Amplitudenkontraste der seismischen Energie zu finden, Folgendes durchgeführt wird:

   - in jedem der beiden Teile (10, 11) des Berechnungsfensters werden die Niveaus der seismischen Energie einer Welle (3), deren Verlagerung im Boden von dem linken Randbereich des Berechnungsfensters in Richtung auf den rechten Randbereich gerichtet ist, beziehungsweise, wenn die Welle (3) in den Bereich des linken Teils (10) gelangt, dann, wenn die Welle (3) in den Bereich des rechten Teils (11) ankommt, und das Niveau der seismischen Energie einer Welle (4), deren Verlagerung im Boden vom rechten Randbereich des Berechnungsfensters in Richtung auf den linken Randbereich gerichtet ist, beziehungsweise, wenn sie in den Bereich des rechten Teils (11) ankommt, dann, wenn sie in den Bereich des linken Teils (10) gelangt, analysiert;

- jedes Mal werden die verschiedenen Energieniveaus ($E_1$, $E_2$, $E_3$, $E_4$), die in jedem der beiden Teile (10, 11) registriert sind, auf die gesamte gerichtete seismische Energie (Ea, Eb) bezogen;

- die erhaltenen Verhältniszahlen ($R_1$, $R_2$, $R_3$, $R_4$) werden miteinander verglichen.

**3.** Verfahren nach irgendeinem der Ansprüche 1 oder 2, **dadurch gekennzeichnet, dass** ein Berechnungsfenster benutzt wird, das das gesamte seismische Kabel (1) umfasst und in dem die Anzahl n der gewählten Sensoren (2) gleich der Anzahl N der Sensoren (2) ist.

**4.** Verfahren nach irgendeinem der vorgehenden Ansprüche, **dadurch gekennzeichnet, dass** ein Berechnungsfenster benutzt wird, bei dem die Anzahl n der gewählten Sensoren (2) kleiner ist als die Anzahl N der Sensoren (2).

**5.** Verfahren nach Anspruch 4, **dadurch gekennzeichnet, dass**, um die Zuverlässigkeit der Ergebnisse zu erhöhen und ein Abhören des Erdbodens oder des Untergrundes (13) auf einer kleinen Oberfläche zu erlauben, das Berechnungsfenster, bei dem die Anzahl n der gewählten Fühler (2) kleiner als die Anzahl N der Sensoren ist, entlang des seismischen Kabels (1) sovielmal wie möglich ab den N Sensoren (2) verschoben wird.

**6.** Verfahren nach Anspruch 5, **dadurch gekennzeichnet, dass** zwei aufeinander folgende Berechnungsfenster um eine physische Entfernung beabstandet werden, die wenigstens gleich so groß ist wie die Entfernung (DX) zwischen zwei aufeinander folgenden Sensoren (2) des seismischen Kabels (1).

**7.** Verfahren nach irgendeinem der vorgehenden Ansprüche, **dadurch gekennzeichnet, dass**, um die Heterogenitäten des Untergrundes (13) auf einer großen Oberfläche, nämlich entlang großer Linien, festzustellen, das seismische Kabel (1) schrittweise um einen Abstand verschoben wird, der von seiner Länge, dem Wert N der Anzahl der Sensoren (2), die er umfasst, der Entfernung (DX) zwischen den verschiedenen Sensoren (2), der Größe des kleinsten gewünschten Berechnungsfensters und von dem Abstand zwischen zwei Berechnungsfenstern abhängt.

**8.** Verfahren nach irgendeinem der vorgehenden Ansprüche, **dadurch gekennzeichnet, dass** als Quelle der seismischen Energie der Umgebungslärm benutzt wird.

**9.** Verfahren nach irgendeinem der Ansprüche 1 bis 7, **dadurch gekennzeichnet, dass** als Quelle der seismischen Energie der Gewerbelärm benutzt wird.

**10.** Verfahren nach irgendeinem der Ansprüche 1 bis 7, **dadurch gekennzeichnet, dass** als Quelle der seismischen Energie der anthropogene Lärm benutzt wird.

12    1    10    11    2

13

3 →

← 4

**Fig. 1**

12    1    10    11    2

13

3 →

← 4

5

**Fig. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6253870 B
- WO 03056360 A